# EUROPEAN PATENT SPECIFICATION

(11) **EP 4 072 806 B1**
(45) Date of publication and mention of the grant of the patent: **24.09.2025**
(21) Application number: 20824648.8
(22) Date of filing: 02.12.2020
(51) Int. Cl.: B27K 3/52, B27K 5/02, C09D 15/00

(54) **WOOD MODIFICATION METHOD AND MODIFIED WOOD**
VERFAHREN ZUR MODIFIZIERUNG VON HOLZ UND MODIFIZIERTES HOLZ
PROCÉDÉ DE MODIFICATION DU BOIS ET BOIS MODIFIÉ

(30) Priority: 13.12.2019 LT 2019537
(43) Date of publication of application: 19.10.2022
(73) Proprietor: Lietuvos Agrariniu Ir Misku Mokslu Centras, 58344 Akademijos mstl., Kédainiu r. (LT)
(72) Inventor: GRIGAS, Vytautas, 53203 Garliava, Kauno raj. (LT); ALEINIKOVAS, Marius, 46382 Kaunas (LT)
(74) Representative: AAA Law
(86) International application number: PCT/IB2020/061358
(87) International publication number: WO 2021/116829

(56) References cited:
- JP-A- 2010 006 045
- JP-A- H03 266 601
- JP-B2- H0 649 284
- KIELMANN BODO CASPAR ET AL: "Modification of wood with formulations of phenolic resin and iron-tannin-complexes to improve material properties and expand colour variety", HOLZ ALS ROH- UND WERKSTOFF, SPRINGER-VERLAG. BERLIN, DE, vol. 76, no. 1, 25 March 2017 (2017-03-25), pages 259 - 267, XP036389912, ISSN: 0018-3768, [retrieved on 20170325], DOI: 10.1007/S00107-017-1180-0

## Description

### TECHNICAL FIELD

The present invention relates to methods for modifying the physical/chemical properties of wood by altering the properties of the wood and giving the wood a new color throughout the whole volume. and a wood modified according to the method.

### TECHNICAL LEVEL

In the woodworking industry, the aim is often to give new properties to various types of wood; such properties include durability, resistance to moisture, ultraviolet (UV) radiation, pests and rot, aesthetic appearance - a new color or shade, and so on. These properties are given by various chemical materials, such as various types of varnishes or paints, also by coating the surfaces of wood or wood products with said materials. However, it is particularly difficult to give wood a natural dark colors, such as black, gray, blue, purple, brown or similar, and combinations of these colors throughout the volume of the wood product.

Such change in color naturally occurs throughout the volume of wood product in nature, when the trees that had been fallen into a swamp in the wetlands get preserved and, due to anaerobic conditions, remain in the environment naturally saturated with tannins and other substances for a long time. The period during which the wood acquires its characteristic color and properties under such conditions can range from a few hundred to several thousand years. It is not known exactly where trees fossilized in such way can be found, as they are usually under the ground surface. The natural darkness and shade of wood depends on the concentration of tannins in the wood, concentration of minerals (macroelements and microelements, including metals) in the environment where the wood was present, and other specific environmental factors (temperature, pressure, time, etc.).

Various methods have been proposed to create wood of analogous or identical color within the volume of the wood blank by using technological processes. One of them is German patent DE4316234, published on 17-11-1994. This patent describes a process in which wood is carefully painted. Wood blanks are placed in a pressure-proof vessel. The said vessel is filled with water to moisten the wood. The soluble paint is then dissolved and mixed in water; the vessel with the solution is heated at a temperature of at least 85°C for at least 6 hours under elevated pressure and the internal pressure in the vessel is at least 8 atm above atmospheric pressure. The pressure is then reduced and the paint is discharged from the vessel. The vessel is refilled with clean water, heated and emptied again to rinse off any paint residue. During rinsing, the temperature is reduced and the modified wood blanks are removed from the vessel, excess water removed, and finally the wood blanks are dried to initial moisture content.

U.S. Patent US2002178608, published on 5-12-2002, describes an apparatus and method for producing wood that is identical to bog oak found in wetlands. This method consists of several main steps: loading the wood into the reactor; reactor sealing; reactor vacuuming; ammonia injection into the reactor; reduction the temperature (and the pressure) inside the reactor; hydrothermal treatment of wood inside the reactor; removal of wood, the properties of which should be similar to that of bog oak, from the reactor. The process should take no longer than one hundred and twenty hours, which is significantly shorter than a natural process that takes thousands of years.

British Patent GB152427, published on 14-10-1920, describes the method of treating wood to change the color of the wood, for example to black or gray, by using a solution of a mixture of iron and tannins. The wood is immersed several times in said tannin mixture solution and dried. Finally, the wood is treated with ammonia or other alkali. Natural *Haematoxylon campechianum* extract can be used instead of or in combination with tannins to change the color. Impregnation can be performed by using vacuum or elevated pressure, low or high temperature. When increasing the amount of tannins, the reaction accelerates. KIELMANN BODO CASPAR ET AL: "Modification of wood with formulations of phenolic resin and iron-tannin-complexes to improve material properties and expand colour variety" and JP H03 266601 A disclose as well methods for coloring wood.

The above-mentioned inventions describe solutions in which various materials are used to alter wood color throughout the volume and vacuumed hermetic reactors are required. The use of additional materials can be potentially harmful to the environment and people. The aforementioned German patent DE4316234 uses a dye to change the color of the blank and does not use tannins.

Also, in many inventions, materials such as ammonia, the use of which is described in the aforementioned U.S. Patent US2002178608, are required. Although discoloration during wood treatment with ammonia is possible throughout the volume of the wood blank, the use of ammonia can cause ecological problems and the resulting discoloration of the wood is limited only by shades of brown of varying intensity. Another important disadvantage of using ammonia is that it reduces the wood density.

### SUMMARY OF THE INVENTION

In order to overcome the above drawbacks, the present invention provides a method of modifying wood by giving it new properties, including an increase in wood density, and changing the color of the wood (possible shades of black, gray, blue, purple, yellow, green, silver or brown and combinations) throughout the volume, as well as a wood modified according to the method.

This method consists of several steps: 1 - placing the wood blank into the container; 2 - creating vacuum in the container; 3 - dissolving inorganic compounds in a solvent; 4 - addition of tannins into the solution; 5 - filling the container with solution so that all placed blanks are submerged; 6 - generating pressure in the container; 7 - heating the container with solution to a certain required temperature; 8 - maintaining temperature of container and solution for the required period of time; 9 - after the required time and after the wood blank has acquired the desired color (black, gray, blue, purple, brown or similar colors to the above or combinations of the above colors), 10 - stopping the heating process and removing the solution from the container; washing of wood blanks; 11 - drying the wood blanks.

Prepared wood acquires the said properties when inorganic compounds react with tannins naturally present and / or incorporated in the wood. The reaction proceeds faster under vacuum, elevated temperature or pressure.

Other features and advantages of the present invention will be better understood by reading the most preferred embodiments and taking into account the accompanying drawings.

### SHORT DESCRIPTION OF DRAWINGS

The drawing figures are provided as a reference to possible embodiments only and are not intended to limit the scope of the invention in any way. Neither of the drawings presented herein should be construed as limiting the scope of the invention, but merely as an example of possible embodiment.

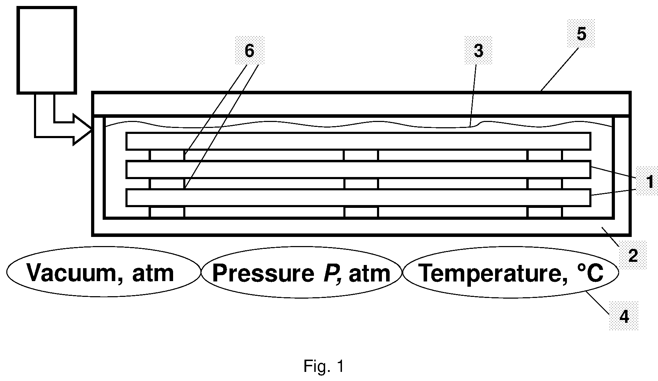

An example drawing of wood blank modification technology is given in Figure 1. The drawing shows a schematic diagram of the most suitable embodiment, consisting of the container, the heating element and the solution.

### DETAILED DESCRIPTION OF EMBODIMENTS OF THE INVENTION

Embodiments of the invention will hereinafter be described with reference to the drawings, but embodiments of the invention are not limited to the embodiments disclosed herein, and various modifications of the embodiments are possible.

In order to clearly and concisely illustrate embodiments of the invention, elements not related to embodiments of the invention will not be shown in the drawings. In addition, identical or similar elements have the same reference numbers wherever possible or practical. Equally important is the fact that the dimensions of the layers and elements are enlarged or schematically illustrated, or that some layers are not shown for clarity. The dimensions of each part may not reflect the actual element sizes.

The aim of the present invention is to provide a method for modifying the physical/chemical properties of wood. More specifically, the aim is to develop a method of modifying wood so that the wood blank (1) acquires a higher wood density, resistance to rot and the desired dark color throughout the volume. However, the present invention is not limited to changing the color only over the whole volume, as it is not always desirable for the color to be absorbed in 100 percent (hereinafter referred to as %) of the volume of the wood blank (1). The present invention comprises a modification method in which the wood blank (1) acquires the desired dark color by at least 20% of its volume.

In the preferred embodiment of the invention, the desired dark color is at least one of the following: black, gray, blue, purple, yellowish, greenish, silver, brown, or similar colors or combinations of said colors. It should be clear to one skilled in the art that there are other dark colors and shades that can be achieved when the tannins naturally present in the wood react with inorganic compounds in the wood volume. Therefore, the present invention is not limited to these colors and includes all colors that occur by the reaction of naturally present tannins in wood with inorganic compounds to form complexes with metal ions.

In the most preferred embodiment of the invention, the wood for modification can be selected from the following tree species: oak, spruce, pine, spruce, walnut, maple, ash, alder, birch, beech, cherry, eucalyptus, larch, elm, and pear. However, the present invention is not limited to these species and includes all tree species that are processed in the wood industry.

In the most preferred embodiment of the invention, the wood blank (1) is debarked and cut to form flat surfaces so as to acquire the shape of a rectangular parallelepiped. However, the present invention is not limited to this form, and practically any shape can be processed in the manner disclosed herein.

In the most preferred embodiment of the invention, the container (2) is a sealed container with an iron inner surface made of stainless steel. It should be clear to a person skilled in the art that the inner surface of the container (2) can be made of any heat-conducting, heat-resistant and hermetic material. The sealing can be created by using the cover (5), but other sealing methods are possible, such as one-piece sealed housing. The present invention is not limited to the container (2) and includes all containers in which the wood blank (1) can be placed in a sealed manner, which can be filled with the solution (3) and heated together with the entire system.

According to the invention, the solution (3) consists of a solvent with the required concentration of inorganic compounds and the required concentration of tannins dissolved therein. According to the invention, the solvent is water in which said compounds can dissolve in order to achieve a change in the properties of the wood blank (1).

According to the invention, the inorganic compounds are all metal oxides, mixtures of metal oxides, metal salts and mixtures of metal salts. By mixing them, different physical/chemical properties and colors of the wood can be obtained. These metal oxides can be: iron oxide, magnesium oxide, calcium oxide, potassium oxide. Metal salts can be: carbonates (FeCO₃, MgCO₃, CaCO₃, K₂CO₃), chlorides (FeCl₂, MgCl₂, CaCl₂, KCI), sulfates (FeSO₄, MgSO₄, CaSO₄, K₂SO₄). However, the said inorganic compounds are not limited to the materials presented here, as various inorganic compounds not mentioned here are possible to react with natural tannins in wood to form insoluble metal-tannin complexes and to give the wood product (1) specific properties, rot resistance, color, etc.

According to the invention, the method of processing the wood blank (1) consists of the following steps: placing the wood blank (1) into the container (2); creating a vacuum in the container; dissolving an inorganic compound in a solvent - preparing the solution (3); incorporation of tannins into the solution; filling the container (2) with the solution (3); changing internal pressure in the container (2) with the solution (3) to the required pressure; heating the container (2) with the solution (3) to the required temperature; maintaining the temperature and the pressure in the container (2) with the solution (3) for the required time; stopping the heating process; reducing the pressure and the temperature to the required levels and removing the solution (3) from the container (2) after the required time; washing the wood blanks (1); drying the wood blanks (1).

In the most preferred embodiment of the invention, during the step of placing the wood blank (1) into the container (2), the wood blanks (1) are placed into the sealed container (2) on top of each other. The blanks are separated by at least one spacer (6) so that the solution (3) covers the entire surface of the wood blanks (1) as much as possible (Fig. 1).

In the most preferred embodiment of the invention, during the step of creating a vacuum in the container, the internal pressure in the container (2) is reduced to a technical vacuum. The reduced pressure is created in the container (2) to increase the absorption of the solution into the wood blank (1). When the pressure is reduced, the cells of the wood blank (1) expand and the solution (3) penetrates deeper into the wood blank (1). In this embodiment of the invention, a reduced pressure is created before the solution (3) is added to the container (2). When the solution (3) is added to the container (2), the required increased pressure is created in the container (2) (the step - changing the internal pressure to the required pressure), which catalyzes the process by pressing the solution (3) deeper into the volume of the wood blank (1). It should be clear to a person skilled in the art that the required increased pressure does not substantially affect the properties of the wood blank, and the increased pressure only acts as a catalyst for the process. The temperature in the container (2) is then raised to the required level and the blank is stored for the required period of time. However, this embodiment is not limited to the required increased pressure, temperature, and treatment duration provided herein, as various pressures, temperatures, and durations are available to achieve the change in the properties of the wood blank (1). Since an unlimited number of combinations can be made with pressure, temperature, and duration, we will provide only an exemplary combination, which should not be construed as limiting the invention. The present invention encompasses all pressures from 0.01 atmospheres (hereinafter abbreviated as atm) to 20 atm above atmospheric pressure; all boiling points of the solution (3) from 7°C to 200°C; all the durations from one hour to one month. When the internal pressure in the container (2) is 8 atm, the temperature is 120°C, the treatment duration of wood blank in the container depends on the dimensions of the wood blank.

By applying vacuum, pressure or by alternating these processes, it is possible to achieve much deeper penetration of the solution (3) into the walls of the wood cells and the spaces between the cells. In this way, the modifying process of the wood properties would be accelerated. The vacuum extracts water and air from the wood's micro and macro capillaries. Subsequently, by increasing the pressure and immersing the wood blanks (1) in the solution (3), it is possible to improve the penetration of the solution (3) into the micro and macro capillaries of the wood and thus to ensure a much better reaction throughout the wood volume.

In the most preferred embodiment of the invention, during the step of dissolving the inorganic compound in the solvent, the selected amount of the inorganic compound is dissolved in the solvent - the solution is prepared (3). The volume of inorganic compound is selected to achieve the required concentration. In the preferred embodiment, the concentration of the inorganic compound in the solution (3) is 0.1%. It should be clear to a person skilled in the art that reducing the concentration may not change the desired properties of the modified wood blank (1), the color may be light, and increasing the concentration may improve and darken the desired color. This embodiment is not limited to the quantities and concentrations provided herein, as various quantities and concentrations are available to achieve a change in the properties of the wood blank (1). The concentration can vary from 0.01% to 5%.

In the preferred embodiment of the invention, the amount of tannins of known concentration selected during the tannin incorporation step is dissolved in the solution (3). The amount of tannins is selected to achieve the required concentration. In the most preferred embodiment, the tannins' concentration is 0.1%. It should be clear to one skilled in the art that tannins can be added into the solution (3) in various concentrations and in different forms, both in a condensed powder and a liquid form. The tannins are added in order to adapt the disclosed modification method to a wood that does not contain sufficient amount of natural tannins. The artificially added tannins react and are absorbed by the wood blank (1) along with the solution. However, this embodiment is not limited to the quantities and concentrations provided herein, as various quantities and concentrations are available to achieve a change in the properties of the wood blank (1). Different wood species contain different concentrations of natural tannins in the wood, so the required concentration of tannins to be inserted depends not only on the desired color, but also on the type of the wood blank (1) and other conditions, such as wood dimensions, treatment duration, etc. The concentration of inserted tannins can vary from 0.01% to 5%.

In the most preferred embodiment of the invention, during the step of filling the container (2) with the solution (3), the solution (3) is added at least to such a level that all the placed wood blanks (1) are completely submerged.

In the most preferred embodiment of the invention, during the step of heating the container (2) with the solution (3) to the required temperature, the container (2) with the wood blanks (1) placed in the solution (3) is heated to the required temperature. It should be clear to a person skilled in the art that the required temperature can be achieved by various heating methods and no heating methods should be considered restrictive. The heating method presented here is the container (2) with the heating elements (4). The heat of the heating elements (4) is controlled so as to heat container (2) with the wood blank (1) and the solution (3) to the required temperature, and then to maintain a steady temperature. The required temperature can be from 60°C to 140°C, depending on the required pressure and the required treatment duration, so it should be clear to a person skilled in the art that the required temperature does not limit the scope of the invention and can be any as long as the tannins react with the inorganic compound.

In the most preferred embodiment of the invention, during the step of maintaining the temperature of the container (2) and the solution (3) for a certain period of time, heating of the container (2) is maintained until the required time has elapsed. The treatment duration depends on the selected pressure, selected temperature, tannin concentration, dimensions of the wood blank (1) and the type of the wood blank (1), so it should be clear to a person skilled in the art that the required treatment duration (time) does not limit the scope of the invention and can be arbitrary, after which the wood blank (1) is given new visual properties at a rate of at least 20% by volume.

In the most preferred embodiment, during the step pf stopping the heating process, normalizing the pressure and removing the solution (3) from the container (2) after the required time, the heating is stopped and the solution (3) is removed from the container (2), leaving only the wood blanks (1) with spacers (6) in the container (2). It should be clear to one skilled in the art that stopping the heating depends on the heating process chosen. In the embodiment, when the heating process takes place while maintaining the heating with the heating elements (4), the process is stopped by switching off the heating elements (4). The solution (3) can be removed from the container (2) through the liquid outlet, by dipping out the solution (3) or by other methods used and known in the art.

In the most preferred embodiment, during the step of washing the wood blanks (1), the wood blanks (1) are washed with water in order to separate the unabsorbed solution (3) from the wood blank (1). It should be clear to a person skilled in the art that the method of washing the wood blanks (1) must not limit the scope of the invention and that the blanks (1) can be washed in various ways and means to remove the unabsorbed solution (3) from the blank (1).

In the most preferred embodiment, during the step of drying the wood blanks (1), the moisture content of the wood blanks (1) is reduced to the required moisture content by drying the blanks in a convection or a vacuum dryer. It should be clear to a person skilled in the art that the method of drying the blanks (1) must not limit the scope of the invention and that the wood blanks (1) can be dried in various ways and means to achieve the desired moisture content.

Additional means (not shown in the drawings), such as belts or weights, may be used to keep the blanks completely submerged, avoiding free floating in the solution.

The method disclosed here can be applied not only to change the wood density, to increase the rot resistance, to change the color throughout the volume, but also to make other modifications of physical/chemical properties of the wood. Additional modifications can be: increased resistance to UV radiation and to atmospheric impact. For this reason, it should be apparent to one skilled in the art that modification of other properties by applying the steps disclosed herein should also be considered within the scope of the present invention.

## Claims

1. The method of treating a wood blank, to give said wood blank a dark color through at least 20% of volume, consisting of the steps of:
a) placing the wood blank into the container,
b) creating a vacuum in the container,
c) preparing a solution - dissolving an inorganic compound in a solvent, wherein the solvent is water,
d) adding the tannins into the solution to the required concentration, wherein the solution consists of the solvent with the required concentration of inorganic compounds and the required concentration of tannins dissolved therein,
e) filling the container with the solution, at least to such level that the placed wood blanks are completely submerged,
f) increasing internal pressure in the container with the solution to the required pressure,
g) heating the container with the solution to a required temperature,
h) maintaining the temperature of the container and the solution for a required time,
i) stopping the heating process, normalizing the pressure after the required time and removing the solution from the container,
j) washing the wood blanks,
k) drying the wood blanks,
**characterized in that**
- said inorganic compounds are any one of metal oxides, mixtures of metal oxides, metal salts and mixtures of metal salts reacting with said tannins thereby forming metal-tannin compounds, and
- the required temperature, in the steps of (g) heating and (h) maintaining the temperature, is in the range 60°C to 140°C.

2. The method of treating a wood blank according to claim 1, **characterized in that** during the step of placing the wood blanks into the container, the wood blanks are placed in a sealed container on top of each other, where the wood blanks are separated by at least one spacer.

3. The method of treating a wood blank according to claim 1, **characterized in that** the metal oxides are iron oxide, magnesium oxide, calcium oxide, potassium oxide, and the metal salts are carbonates FeCOs , MgCO₃, CaCO₃, KCO₃, chlorides FeCl₂ , MgCl₂ , CaCₗ₂ , KCl₂.

4. The method of treating a wood blank according to claim 1, **characterized in that** the wood blanks obtained during the wood blank washing step are washed with water in order to remove the unabsorbed solution from the wood blanks.

5. The method of treating a wood blank according to claim 1, **characterized in that** during the step of drying the wood blanks, the moisture content of the wood blanks is reduced to the required moisture content by drying the wood blanks in a convection or a vacuum dryer.

6. The method of treating a wood blank according to claim 1, **characterized in that** the pressure can be from 0.01 atmospheres to 20 atmospheres above the atmospheric pressure.

7. The method of treating a wood blank according to claim 1, **characterized in that** the treatment duration of the wood blank is from 1 hour to 1 month, depending on the dimensions of the wood blank.

8. The method of treating a wood blank according to any of claims 1 and 7, **characterized in that** the pressure, vacuum, or alternating these processes are applied for deeper penetration of the solution (3) into the wood blanks being treated.

9. A modified wood blank obtained by the method according to any of claims 1 to 8.

## Patentansprüche

1. Verfahren zum Behandeln eines Holzrohlings, um dem Holzrohling durch mindestens 20 Vol.-% eine dunkle Farbe zu verleihen, bestehend aus den folgenden Schritten:
a) Platzieren des Holzrohlings in den Behälter,
b) Erzeugen eines Vakuums in dem Behälter,
c) Präparieren einer Lösung - Auflösen einer anorganischen Verbindung in einem Lösungsmittel, wobei das Lösungsmittel Wasser ist,
d) Zugeben der Tannine in die Lösung bis zur erforderlichen Konzentration, wobei die Lösung aus dem Lösungsmittel mit der erforderlichen Konzentration von anorganischen Verbindungen und der erforderlichen Konzentration von darin aufgelösten Tanninen besteht,
e) Füllen des Behälters mit der Lösung mindestens bis zu einem Niveau, bei dem die platzierten Holzrohlinge vollständig untergetaucht sind,
f) Erhöhen eines internen Drucks in dem Behälter mit der Lösung bis zu dem erforderlichen Druck,
g) Erwärmen des Behälters mit der Lösung auf eine erforderliche Temperatur,
h) Aufrechterhalten der Temperatur des Behälters und der Lösung für eine erforderliche Zeit,
i) Stoppen des Erwärmungsprozesses, Normalisieren des Drucks nach der erforderlichen Zeit und Entfernen der Lösung aus dem Behälter,
j) Waschen der Holzrohlinge,
k) Trocknen der Holzrohlinge,
**dadurch gekennzeichnet, dass**
- die anorganischen Verbindungen ein beliebiges von Metalloxiden, Gemischen aus Metalloxiden, Metallsalzen und Gemischen aus Metallsalzen sind, die mit den Tanninen reagieren, wodurch Metall-Tannin-Verbindungen gebildet werden, und
- die erforderliche Temperatur in den Schritten (g) des Erwärmens und (h) des Aufrechterhaltens der Temperatur im Bereich von 60 °C bis 140 °C liegt.

2. Verfahren zum Behandeln eines Holzrohlings nach Anspruch 1, **dadurch gekennzeichnet, dass** die Holzrohlinge während des Schritts des Platzierens der Holzrohlinge in den Behälter in einem abgedichteten Behälter aufeinander platziert werden, wobei die Holzrohlinge durch mindestens einen Abstandshalter getrennt sind.

3. Verfahren zum Behandeln eines Holzrohlings nach Anspruch 1, **dadurch gekennzeichnet, dass** die Metalloxide Eisenoxid, Magnesiumoxid, Calciumoxid, Kaliumoxid sind und die Metallsalze die Carbonate FeCO₃, MgCO₃, CaCO₃, KCO₃ und die Chloride FeCl₂, MgCl₂, CaCl₂, KCl₂ sind.

4. Verfahren zum Behandeln eines Holzrohlings nach Anspruch 1, **dadurch gekennzeichnet, dass** die während des Holrzohlingwaschschritts erlangten Holzrohlinge mit Wasser gewaschen werden, um die nicht absorbierte Lösung von den Holzrohlingen zu entfernen.

5. Verfahren zum Behandeln eines Holzrohlings nach Anspruch 1, **dadurch gekennzeichnet, dass** der Feuchtigkeitsgehalt der Holzrohlinge während des Schritts des Trocknens der Holzrohlinge durch Trocknen der Holzrohlinge in einem Konvektions- oder Vakuumtrockner auf den erforderlichen Feuchtigkeitsgehalt reduziert wird.

6. Verfahren zum Behandeln eines Holzrohlings nach Anspruch 1, **dadurch gekennzeichnet, dass** der Druck von 0,01 Atmosphären bis 20 Atmosphären über dem Atmosphärendruck betragen kann.

7. Verfahren zum Behandeln eines Holzrohlings nach Anspruch 1, **dadurch gekennzeichnet, dass** die Behandlungsdauer des Holzrohlings je nach den Abmessungen des Holzrohlings von 1 Stunde bis 1 Monat beträgt.

8. Verfahren zum Behandeln eines Holzrohlings nach einem der Ansprüche 1 und 7, **dadurch gekennzeichnet, dass** der Druck, das Vakuum oder ein Alternieren dieser Prozesse zum tieferen Eindringen der Lösung (3) in die unter Behandlung stehenden Holzrohlinge angewendet werden.

9. Modifizierter Holzrohling, der durch das Verfahren nach einem der Ansprüche 1 bis 8 erlangt wird.

## Revendications

1. Procédé de traitement d'une ébauche de bois, pour donner à ladite ébauche de bois une couleur foncée sur au moins 20 % du volume, comprenant les étapes consistant à :
a) placer l'ébauche de bois dans le récipient,
b) créer un vide dans le récipient,
c) préparer une solution dissolvant un composé inorganique dans un solvant, le solvant étant l'eau,
d) ajouter les tanins dans la solution à la concentration requise, la solution étant constituée du solvant avec la concentration requise de composés inorganiques et la concentration requise de tanins dissous dans celui-ci,
e) remplir le récipient avec la solution, au moins jusqu'à un niveau tel que les ébauches de bois placées soient complètement immergées,
f) augmenter la pression interne dans le récipient contenant la solution jusqu'à la pression requise,
g) chauffer le récipient contenant la solution à une température requise,
h) maintenir la température du récipient et de la solution pendant une durée requise,
i) arrêter le processus de chauffage, normaliser la pression après le temps requis et retirer la solution du récipient,
j) laver les ébauches de bois,
k) sécher les ébauches de bois,
**caractérisé en ce que**
- lesdits composés inorganiques sont l'un quelconque des oxydes métalliques, des mélanges d'oxydes métalliques, des sels métalliques et des mélanges de sels métalliques réagissant avec lesdits tanins formant ainsi des composés métal-tanin, et
- la température requise, dans les étapes (g) de chauffage et (h) de maintien de la température, est comprise entre 60°C et 140°C.

2. Procédé de traitement d'une ébauche de bois selon la revendication 1, **caractérisé en ce que** pendant l'étape de placement des ébauches de bois dans le récipient, les ébauches de bois sont placées dans un récipient scellé les unes sur les autres, où les ébauches de bois sont séparées par au moins une entretoise.

3. Procédé de traitement d'une ébauche de bois selon la revendication 1, **caractérisé en ce que** les oxydes métalliques sont l'oxyde de fer, l'oxyde de magnésium, l'oxyde de calcium, l'oxyde de potassium, et les sels métalliques sont les carbonates FeCO₃, MgCO₃, CaCO₃, KCO₃, les chlorures FeCl₂, MgCl₂, CaCl₂, KCl₂.

4. Procédé de traitement d'une ébauche de bois selon la revendication 1, **caractérisé en ce que** les ébauches de bois obtenues lors de l'étape de lavage des ébauches de bois sont lavées à l'eau afin d'éliminer la solution non absorbée des ébauches de bois.

5. Procédé de traitement d'une ébauche de bois selon la revendication 1, **caractérisé en ce que** pendant l'étape de séchage des ébauches de bois, la teneur en humidité des ébauches de bois est réduite à la teneur en humidité requise en séchant les ébauches de bois dans un sécheur à convection ou sous vide.

6. Procédé de traitement d'une ébauche de bois selon la revendication 1, **caractérisé en ce que** la pression peut être de 0,01 atmosphère à 20 atmosphères au-dessus de la pression atmosphérique.

7. Procédé de traitement d'une ébauche de bois selon la revendication 1, **caractérisé en ce que** la durée de traitement de l'ébauche de bois est de 1 heure à 1 mois, en fonction des dimensions de l'ébauche de bois.

8. Procédé de traitement d'une ébauche de bois selon l'une quelconque des revendications 1 et 7, **caractérisé en ce que** la pression, le vide ou l'alternance de ces procédés sont appliqués pour une pénétration plus profonde de la solution (3) dans les ébauches de bois traitées.

9. Ébauche de bois modifiée obtenue par le procédé selon l'une quelconque des revendications 1 à 8.
